# EUROPEAN PATENT SPECIFICATION

(11) **EP 2 782 942 B1**
(45) Date of publication and mention of the grant of the patent: **23.03.2022**
(21) Application number: 12794686.1
(22) Date of filing: 22.11.2012
(51) Int. Cl.: C08G 8/00, B01D 39/20, B05D 3/02, C08G 12/00, C08K 5/053, C08L 61/00, C08L 61/20, C08L 61/32, D06M 15/507

(54) **MODIFIED BINDER COMPOSITIONS**
MODIFIZIERTE BINDEMITTELZUSAMMENSETZUNGEN
COMPOSITIONS DE LIANT MODIFIÉES

(30) Priority: 22.11.2011 GB 201120137
(43) Date of publication of application: 01.10.2014
(73) Proprietor: Prefere Resins Holding GmbH, 15537 Erkner (DE)
(72) Inventor: JOBBER, Andrew, A-3500 Krems (AT); PROCK, Christoph, A-3910 Zwettl (AT); EMSENHUBER, Martin, A-3550 Gobelsburg (AT)
(74) Representative: Hoyng Rokh Monegier B.V.
(86) International application number: PCT/EP2012/073365
(87) International publication number: WO 2013/076198

(56) References cited:
- WO-A1-96/26164
- WO-A1-2010/108999
- GB-A- 978 623
- US-A- 2 666 037
- US-A1- 2010 282 996

## Description

### Field of the Invention

The invention relates to a type of aldehyde based resin composition that has an ultralow formaldehyde (ULF) emission both on curing and from the final cured product. Aldehyde based resins are commonly used as a binder or adhesive for the manufacture of mineral wool (glass fibre and stone fibre) products, non-woven materials, wooden boards, plywood, coated materials and/or impregnated material products. The invention further relates to a process for the manufacture of the resin composition, to the use of the resin composition as a binder material for non-woven fibrous material, to a sizing composition for use in mineral wool applications, to a sizing composition for use in saturation or impregnation applications, and to a curable aqueous composition for use in board and wood applications, comprising the aldehyde resin composition according to the invention.

Aldehyde based resins - such as but not limited to phenol formaldehyde resin (PF), phenol urea formaldehyde resin (PUF), urea formaldehyde resin (UF), melamine formaldehyde resin (MF), melamine urea formaldehyde resin (MUF), melamine phenol formaldehyde resin (MPF), and melamine urea phenol formaldehyde resin (MUPF) - can be economically produced for use as a binder in many applications. The term binder also includes adhesives. These types of binders have a number of special characteristics that are well known to those experienced in the art, such as good heat resistance combined with high service temperature of the cured binder (maximum temperature whereby the binder maintains its properties); which means they can not be easily replaced by alternative binder systems. However, formaldehyde based resins usually emit formaldehyde; this can occur from the uncured resin (i.e. free formaldehyde content), curing of the resin (i.e. curing formaldehyde emissions), and from the final resin product (i.e. product formaldehyde emissions). In recent times concerns over formaldehyde and its impact on health (especially with regard to carcinogenicity) have lead to more stringent controls and standards that threaten the application of these binders.

With respect to board products the emission of formaldehyde is restricted by various legal regulations. Boards have a long tradition of being emission-restricted by law, but other applications such as impregnation paper or plywood wherein formaldehyde based resins are also used are mostly unregulated, although the consumer has the strong wish for a very low formaldehyde emission.

### BRIEF SUMMARY OF THE INVENTION

The problem of formaldehyde emissions is described in WO2009040415 DYNEA OY, which relates to a water dilutable resin composition, comprising of a resin that is a reaction product of an aldehyde and a hydroxyl-aromatic compound, said composition further comprising an amino compound comprising 2 - 6 amino groups and a sugar alcohol, wherein the resin has an initial molar ratio of aldehyde to hydroxyl-aromatic compound from 2.3 to 5.5, a ratio of resin to amino compound plus sugar alcohol of 45:55 to 70:30 parts by weight, a ratio of amino compound to resin between 20:80 and 50:50 parts by weight and a ratio of sugar alcohol to resin plus amino compound between 5:95 and 30:70 parts by weight. It was shown that the use of sugar alcohols can reduce the emission of phenol and formaldehyde. It is suggested that the sugar alcohol reduces free phenol and formaldehyde by this way. The use of sugar alcohols is to introduce renewable materials in the resin and to reduce cost of the resin by extension with inexpensive components without seriously affecting the mechanical properties.

However there is a continuous desire to further reduce the formaldehyde emissions. Therefore, the object of the invention is to provide a aldehyde based resin composition that has an ultralow formaldehyde (ULF) emission, during application and curing and from the final cured product.

According to the invention, this objective has been achieved by an aldehyde based resin composition containing one or more reducing sugars preferably chosen from the group consisting of glucose, mannose, glycolaldehyde, glyceraldehyde, erythrose, threose, ribose, arabinose, xylose, lyxose, allose, altrose, gulose, idose, galactose, talose, dihydroxyacetone, erythrulose, ribulose, xylulose, fructose, psicose, sorbose, tagatose, sedoheptulose, glucoheptose, mannoheptose, mannoheptulose, taloheptulose, alloheptulose, aldose, ketose or combinations thereof or a reducing sugar in the form of a carbohydrate feedstock with the bulk properties of a reducing sugar (Reducing Carbohydrate Feedstock - RCF) with a dextrose equivalent (DE) value of at least 50, even more preferably at least 75, and most preferably greater than 90, and optionally a cyanamide, wherein the aldehyde based resin composition is obtainable by reaction of one or more hydroxy aromatic and/or one or more amino functional compounds (I) with one or more aldehyde functional compounds (II) and wherein the reducing sugar compounds (III) is added before or during said reaction and/or after said reaction, wherein the aldehyde based resin composition has infinite water dilutability defined as a water tolerance greater than 50:1, fifty parts of water in one part of resin, measured according to ISO 8989.

It was found that with the aldehyde resin composition according to the invention the strictest requirements for formaldehyde emissions could be met for the composition itself, during curing and from the final cured product.

In one embodiment one or more substantially pure reducing sugars are added. In another embodiment a carbohydrate feedstock with the bulk properties of a reducing sugar (RCF) can be added. In yet another embodiment, the RCF is formed in-situ just before or during the preparation of the aldehyde resin composition, for example by inverting a non-reducing sugar to a reducing sugar, such as the inversion of crystal sugar (sucrose) syrup with citric acid and heat. Reducing sugars means those sugars (or carbohydrate feedstocks) containing a carbonyl group and are capable of reducing freshly prepared Fehling's solution. The reducing properties are expressed as the dextrose equivalent (DE) which is defined as a percentage of reducing power of the carbohydrate feedstock relative to that of glucose. Glucose and starch therefore having DE values of 100 and close to zero respectively (Source: Ullmann's Encyclopedia of Industrial Chemistry, Published Online: 15 OCT 2008, Enzymes, 4. Non-food Application, p. 34). A carbohydrate feedstock with the bulk properties of a reducing sugar can for example be inverted sucrose sugar, a high-fructose corn syrup (HFCS; also called glucose-fructose syrup) or can be obtained by hydrolysing a carbohydrate feedstock, for example starch, to a DE (dextrose equivalent) value of at least 50, even more preferably at least 75, and most preferably greater than 90. The DE preferably is as high as possible, but syrup with lower DE could be preferred for economic reasons while still having the advantage of the invention. The DE can be measured by methods known in the art, for example by the Lane-Enyon titration, based on the reduction of Copper-(II)-sulfate in an alkaline tartrate solution.

Reducing sugars are chemically different from sugar alcohols used in WO2009040415 in that the reducing sugars contain a carbonyl group. Moreover, the use of reducing sugars or carbohydrate feedstocks with the bulk properties of a reducing sugar is not simply an extension measure, but more an introduction of a reactive species to build up the resin matrix: e.g. by reaction of the phenol, formaldehyde, and the reducing sugars or carbohydrate feedstocks with the bulk properties of a reducing sugar.

In the alternative or in addition to the reducing sugars or RCF, the resin composition of the invention can comprise cyanamides for lowering the formaldehyde emissions during manufacture (i.e. upon curing) and the formaldehyde emissions from the final product.

Although it is known in general that formaldehyde and dicyandiamide can react it was surprisingly found that dicyandiamide when added to an aldehyde based resin, in particular a PUF resin, forms a very stable reaction product with excess formaldehyde from which formaldehyde cannot easily separate. Not only formaldehyde emissions on curing of the resin are reduced, but also from the cured resin itself. A further reduction can be achieved even after urea extension of the aldehyde resin. So in one embodiment the cyanamide is added to reduce formaldehyde emissions from formaldehyde based resins that are urea extended. In another embodiment the cyanamide and reducing sugar compound can be employed together within the same resin composition.

The resin composition of the invention can be used in heat curable applications, for example in the production of mineral wool (glass fibre and stone fibre) products, non-woven materials, wooden boards, plywood, and/or impregnated material - where it is required, or it is desired, to have ultra low formaldehyde emissions.

The invention also relates to the use of reducing sugars or RCF or a cyanamide to lower the formaldehyde emissions during manufacture (i.e. curing) and the formaldehyde emissions from the final product. The use of the reducing sugars or RCF or cyanamide can be combined with other techniques for reducing formaldehyde emissions, in particular urea extension.

### Description of Related Prior Art

EP0810981 (WO96/26164) ROCKWOOL LAPINUS BV describes a method for manufacturing a mineral wool product made of a PF resin of a P:F MR (molar ratio) of 1:2.8 - 1:6, an ammonia containing solution, and a sugar containing solution. The resin and the solutions are mixed together and then applied onto the mineral wool and cured. The pH is basic and the sugar solution may contain mono-, di-, oligo- or polysaccharides, at 1-80wt% of the mixture. The sugar is added after the PF methylolation / condensation phase or just before the final application in the preparation of the sizing composition that is to be sprayed onto the mineral wool fibres. EP0810981 describes the use of sugar, without distinguishing between non-reducing sugar and reducing sugars, to reduce the ammonia emissions that arise on curing of the sizing composition.

Austrian Patent 148170 BAYERISCHE STICKSTOFF-WERKE (1936); discloses a formaldehyde and dicyandiamide condensation product that is water soluble and can be used for imparting fire resistance or rot resistance to substrate materials such as wood, or clothing.

The Swiss Patent 201628 BAYERISCHE STICKSTOFF-WERKE (1939); discloses a formaldehyde and dicyandiamide condensation power resin product that can be cured in a hot press. The cured resin then being resistant to water, even boiling water.

US3463747 WESTVACO CORP (1969); discloses an aqueous binder for the manufacturing of a mineral fibre mat. In this application the PF resin is blended 50 - 10% by weight with the condensation product of dicyandiamide and formaldehyde, and the rest consists of 16 - 60% of weight alkali lignin, and 10 - 50% by weight of urea. This combination is made for the use of lignin-urea-phenolic resin as used in the 1960's. The low heat stability of this resin type was enhanced by the addition of a dicyandiamide-formaldehyde resin, wherein the four components; phenol-formaldehyde resin, dicyandiamide-formaldehyde resin, lignin, and urea have to be within certain specific limits to obtain these benefits.

WO2010/108999 from DYNEA OY discloses water dilutable resins comprising the reaction product of an aldehyde, an amino compound comprising 2-6 amino compounds and a sugar alcohol e.g. glycerol.

US2666037 MASONITE CORP (1954); discloses a resin based on reducing sugar modified aniline-phenol-formaldehyde for moulded articles and hardboard manufacture. The resin is a PF resin, which was reacted with the reaction product of a reducing sugar and aniline, and wherein the aniline part has the effect of improved plasticity for the whole resin. The reducing sugar can be derived from hydrolysed lignin cellulose, but can also be arabinose, galactose, mannose, xylose, glucose and other monosaccharides. The manufacture starts with the reaction of phenol and formaldehyde. Separately, the reaction of aniline and reducing sugar is carried out; and finally both reaction products are then reacted together to give the water insoluble modified resin. The resin described in US2666037 is different from the present application inter alia due to the fact that the reaction product of aniline and the reducing sugar is not present in the resin composition of the present invention.

GB978623 relates to a heat-insulating cellular material comprising a cured cellular resinous condensation product derived from an aminoplast precondensation product, said material having an intumescing agent and at least one polysaccharide or a polyol added as thickening agent to increase viscosity of the aqueous solution.

US2010/282996 describes a fiber sizing composition comprising a mono- and/or polysaccharide and an organic polycarboxylic acid as a formaldehyde free alternative for prior art resols.

### Detailed Description of the Invention

The aldehyde based resin is obtainable by reaction of one or more hydroxy aromatic and/or one or more amino functional compounds (I) with one or more aldehyde functional compounds (II) and wherein the reducing sugar compounds (III), and optionally a cyanamide (IV) is added before or during said reaction and/or after said reaction, wherein the aldehyde based resin composition has .infinite water dilutability defined as a water tolerance greater than 50:1, fifty parts of water in one part of resin, measured according to ISO 8989. The various embodiments of the process will be described hereafter.

In the aldehyde based resin the hydroxy aromatic or amino functional compounds (I) are preferably chosen from the group consisting of phenol, resorcinol, cresol, phloroglucine, melamine, urea, thiourea, dicyandiamide, and substituted and/or functionalized phenols. The aldehyde compounds (II) are preferably chosen from the group of C1-C10 aldehydes, C2-C10 dialdehydes or combinations thereof, preferably from the group of formaldehyde, paraformaldehyde, trioxane, hexamethylenetetramine, glyoxal, glutaraldehyde, or combinations thereof. A preferred cyanamide (compound IV) is dicyandiamide. The aldehyde based resin composition typically is curable by heat curing, hardener curing or curing by radiation.

The aldehyde based resin is preferably chosen from the group of phenol formaldehyde resin (PF), phenol urea formaldehyde resin (PUF), urea formaldehyde resin (UF), melamine formaldehyde resin (MF), melamine urea formaldehyde resin (MUF), melamine phenol formaldehyde resin (MPF), melamine urea phenol formaldehyde resin (MUPF), resorcinol formaldehyde resin (RF), resorcinol urea formaldehyde resin (RUF), melamine urea resorcinol formaldehyde resin (MURF), resorcinol melamine formaldehyde resin (RMF), resorcinol phenol formaldehyde resin (RPF), resorcinol phenol urea formaldehyde (RPUF), or resins based on substituted and/or functionalized phenols, like xylenol resins.

In one embodiment in the aldehyde based resin composition, the compound I is phenol and compound II is formaldehyde, and the molar ratio of formaldehyde to phenol (F:P) is between 0.5:1 and 6.0:1, preferably between 1.0:1 and 5.5:1, more preferably between 1.1:1 and 5.0:1, more preferably between 1.3:1 and 4.0:1 and most preferably between 1.5:1 and 4.0:1. To extend the resin, the aldehyde based resin composition may further contain 1 - 50wt%, preferably 5 - 45wt% and more preferably 10 - 40wt% of an amino-compound, preferably urea, (wt% based on the final resin composition).

In another embodiment in the aldehyde based resin composition, the compound I is an amino compound and compound II is formaldehyde, and the molar ratio of formaldehyde to amino compound (F:(NH₂)₂) is between 0.5:1 and 3.5:1, preferably between 0.8:1 and 2.5:1 and most preferably between 1.0:1 and 2.2:1. Preferably, compound I is melamine and compound II is formaldehyde and the molar ratio of formaldehyde to melamine (F:M) is between 1.1:1 and 6.0:1, preferably between 1.2:1 and 4.0:1 and most preferably between 1.25:1 and 2.5:1.

In the aldehyde based resin composition the amount of reducing sugar compounds III with a dextrose equivalent (DE) value of at least 50, even more preferably at least 75, and most preferably greater than 90, is between 0.1 and 40 wt%, preferably between 0.5 and 30 wt%, more preferably between 0.5 and 25 wt%, and most preferably between 1.0 and 20 wt% (wt% of the final resin composition). The amount of dicyanamide (compound IV) preferably is between 0.1 and 20 wt%, preferably between 0.2 and 16 wt%, and most preferably between 0.5 and 12 wt% (wt% of the final resin composition).

The properties of the resin composition relate to the process. The invention also relates to a process for the manufacture of the resin composition according to the invention comprising the steps of forming an aldehyde based resin by reaction of one or more hydroxy aromatic and/or one or more amino functional compounds (I) with one or more aldehyde functional compounds (II) and wherein the reducing sugar compounds (III), and optionally a cyanamide (IV), is added before or during said reaction and/or after said reaction. Component III can be added only before and/or during the reaction of I and II, or III can be added before and/or during the reaction and also after the reaction, or III can be added before and/or during the reaction and IV is added after the reaction optionally with III. In a further embodiment, III is added only after the reaction of I and II, and optionally with the addition of IV.

A first step in the preparation of the resin composition involves addition of one or more hydroxy aromatic and/or one or more amino functional compounds (I) followed by functional compounds (II); for example in the case of PF resins; phenol and formaldehyde, are added to a reactor in the desired molar ratio and allowed to react to form methylolated compounds and condensations products thereof.

For the manufacture of a phenolic resin, a common practice is to charge the phenol to the reactor first, with some water and an alkaline catalyst. The catalyst being either inorganic (e.g. an alkaline metal hydroxide such as LiOH, NaOH, KOH or an alkaline earth hydroxide such as Ca(OH)₂) or organic (e.g. ammonia, an organic amine or amine hydroxylated compound such as but not limited to mono-ethanol amine, tri-ethanol amine). The reactor temperature is then adjusted such as to permit the methylolation reaction to occur - usually in the range 45°C to 180°C and preferably in the range 60°C to 130°C - where upon the formaldehyde is then charged to the reactor. The formaldehyde charged maybe in liquid form as a solution, or as solid (e.g. paraformaldehyde). Since the methylolation of phenol is exothermic, the formaldehyde charge is preferably spread over a specified time period, or divided into a number of smaller charges. In all cases, the reactor employed should have sufficient heating, cooling and reflux capacity to control the specific PF resin recipe and to avoid a "run away" reaction. As is obvious to those skilled in the art the temperature program of the recipe (i.e. the temperature at which the formaldehyde is charged and the temperature at which the resin is held at for methylolation and condensation) is also optimised in view of achieving an ultra low formaldehyde system but also the properties for the envisaged application. Over-condensation would result in lower free formaldehyde and free phenol but also build up the molecular weight of the oligomer chains resulting in inferior properties for its industrial application.

In the case of resins for the mineral wool industry, the resin is utilised in an aqueous sizing solution, which is sprayed onto the glass or stone fibres as they fall onto a collector belt and forms a non-woven mat. This mat then goes via a conveyor belt into a heat treatment area or oven where the resin is cured. During the time between spraying the sizing composition and curing, the resin needs to collect at the junction or contact points between the fibres. This is a result of the surface tension effect.

If the resin has been over-condensed (which means that the condensation degree is higher than desired), it may not have sufficient dilutability (especially after it has been held in storage) or water tolerance to form a stable sizing composition, especially one that contains dusting oil, silane coupling agents and hardeners such as ammonium sulfate. Instead it could fall out of solution causing turbidity and potentially lead to blocking of the spraying nozzles. Furthermore, an over-condensed resin may have different properties even if it does form a clear sizing composition; this might result in such manufacturing issues as precure, poor distribution of the resin at the fibre junctions or contact points, or stickiness of the mat to the collecting belt.

It is common in the application of mineral wool to use a Phenol-Urea-Formaldehyde (PUF) resin for sizing compositions. This is simply a PF resin that has been extended with urea. This leads to a number of advantages familiar to those skilled in the art such as; commercial, fire resistance, viscosity reduction, and most importantly lower free monomers with particular emphasis on lowering formaldehyde.

The urea extension can be either added immediately following the PF methylolation/condensation or at the mineral wool manufacture's site during the preparation of the sizing composition. When added immediately after the PF methylolation/condensation, there maybe a further mild temperature program, to allow the urea to methylolate. In effect the urea then acts as a scavenger and reduces the resins free formaldehyde. Naturally this also reduces the formaldehyde emissions on curing and from the product. This is a second step towards an ultralow formaldehyde system.

The use of urea in a PUF does however have limitations and consequences. First of all it introduces ammonia emissions, both on curing and from the final product: this is a decomposition product from free urea. Secondly, the methylolated urea is in equilibrium with free urea and formaldehyde. Therefore there is a limit to urea's scavenging effect of formaldehyde within the uncured resin. Likewise, even in the fully cured product, there will be some residual urea methylol groups, over time these will gradually hydrolyse and release formaldehyde from the final product at a low, but measurable level that may lead to concern.

It was discovered during the development phase of the ULF binder systems that dicyandiamide could optionally be added following the urea addition to further scavenge formaldehyde. It is believed that methylolated dicyandiamide is also in equilibrium with dicyandiamide and formaldehyde, but that the equilibrium lies more on the side of the methylolated product - especially when compared to the methylolated urea product. Therefore the use of dicyandiamide suppresses the release of formaldehyde, even from the final product.

However in a later stage of the development process it was surprisingly found that reducing sugars could significantly lower the final resin's free aldehyde content, and the subsequent aldehyde emissions from the resin both on curing and from the cured resin; so in the case of formaldehyde based resins a an effective ULF system could be made. The reducing sugar or RCF can be added in different ways;
(a) Post added to a aldehyde based resin - i.e. towards the end of the resin production and following the methylolation and/or condensation phase or phases.
(b) Added at the beginning of (or during) a methylolation and/or condensation phase of an aldehyde based resin.
(c) Added as a split charge, both at the beginning of (or during) a methylolation and/or condensation phase of an aldehyde based resin as in (b) and also post added towards the end of the resin production as in (a).

It was found, as will be shown by the examples, that there are differences between the mode of action resultant from the addition of the reducing sugar or RCF, dependant upon whether it is present during the methylolation/condensation phase (b) or whether it is only post added (a).

In those embodiments where the reducing sugar or RCF is post added (embodiment (a) and (c)), there is a clear reduction of formaldehyde emissions (both on curing and from the cured resin) as opposed to the comparative use of a non-reducing sugar. Without wishing to be bound by any theory, it is speculated that the formaldehyde emissions are reduced in the following way; on curing the carbonyl group of the sugar reacts with an ammonia molecule forming an imine. This in turn can scavenge a formaldehyde molecule thus forming a Schiff-base, which can then undergo a Mannich type reaction with sites having active hydrogen: i.e. on phenol or perhaps even urea. Thus the reducing sugar is bound chemically to the polymer network as it is crosslinking. Furthermore the reducing sugar, whether bound to the PF/PUF/UF or as a free unbound molecule as would be the case when added in excess, could under the hot acidic conditions during curing undergo a cascade of reactions not dissimilar to those of caramelisation and the Maillard reactions - the result being that the reducing sugar is fully bound within the polymer network. The ammonia can originate from the decomposition of the urea extension, or from ammonium salts (e.g. ammonium sulfate) that are used as acidic hardeners on curing, or from ammonia added so as to stabilise the aqueous sizing composition. In the case of PF resins it would be the latter two.

This hypothesis is supported empirically by the fact that these binders still retain more than adequate strength after aging. The aging test will be described in the examples, but suffice to say at present that the binder can withstand being fully immersed in boiling water for 2 x 4 hours and then tested under load whilst still wet. Thus a fully crosslinked structure with the incorporation of the reducing sugar is assumed. The emission tests on curing and from the cured resin will be described in the examples, but suffice to say here that the post addition of a reducing sugar significantly reduces curing emissions of formaldehyde, ammonia and phenol when compared to a control PF/PUF. Likewise a significant reduction in formaldehyde emissions from the cured resin is also seen when compared to control UF resins. This empirical evidence also supports the hypothesis.

In the embodiments of the invention where the reducing sugar is added at the beginning or during a methylolation and/or condensation phase of the aldehyde resin, i.e. embodiments (b) and (c), the reducing sugar appears to significantly facilitate the methylolation step and the consumption of formaldehyde.
When one skilled in the art prepares a PF resin (as described above) it is known that the free monomers, phenol and formaldehyde, decrease during the condensation as can be followed by analytical techniques. Surprisingly it was found that the kinetics of forming a PF resin in the presence of a reducing sugar (all other conditions being equal) were completely different in terms of the consumption of formaldehyde and phenol. The free formaldehyde content of the PF resin with reducing sugar fell much more rapidly with time, but the free phenol content fell more slowly with time (see examples). Another observation was that the colour of the PF resins according to the invention was different: the control was dark red and the PF with the reducing sugar was pale yellow.

Without wishing to be bound by theory, it is thought that the reducing sugar somehow associates with the phenolate ion (formed by the interaction of phenol and the alkaline catalyst e.g. NaOH). This is supported by the yellow colour observation; a phenolate ion sans reducing sugar as known in the art imparts a red colouration. With this association, the methylolation step appears to be accelerated. The consequence is that the free formaldehyde drops more rapidly and to a lower level. Gel Permeation Chromatography (GPC) studies show that the resin is comparable to the control, which means that the association at this stage is transitory and that the reducing sugar has not altered the molecular weight of the oligomers.

Furthermore, the extent of condensation appears to be similar, which is also surprising since the initial methylolation step was accelerated. The reducing sugar, which whilst facilitating the methylolation reaction, could also be suppressing the condensation reactions. It was further observed that resins with the reducing sugar had better storage stability, which also supports the theory and which is an advantage for application of the composition.

As a consequence of the seemingly more active phenol-reducing sugar species, the non-associated phenol has a reduced opportunity to react with formaldehyde, resulting in higher free phenol levels in comparison to the control for a given reaction time. This means that for an ultra low formaldehyde system, the free formaldehyde can be driven down to a much lower level than normal prior to the urea extension and the reducing sugar still remains in situ so as to act in a similar manner to the post added embodiment. It also means that there is a potential issue with free phenol. This can however easily be overcome by using higher formaldehyde to phenol ratio. It is a surprising consequence of the invention, that a higher formaldehyde to phenol ratio than what might normally be used for a given application can be used, and yet still deliver and ultra low formaldehyde system (see inventive example 1 and 2).

As would be obvious from embodiments (a) and (b), a third embodiment (c) whereby the reducing sugar is added both at the beginning or during a methylolation and/or condensation phase of a formaldehyde resin and post added at the end could easily be employed.

Again, as described above, dicyandiamide could also be added with or preferably following the urea extension as a formaldehyde scavenging agent in the embodiments (a), (b) and (c). However, the reduction in formaldehyde emissions (including curing and product emissions) maybe negligible due to the action of the reducing sugar or RCF.

The invention also relates to a sizing composition for use in mineral wool applications comprising
a) 1 - 40 wt% of the aldehyde based resin described above, wherein the resin is a phenol formaldehyde resin (PF) or a phenol urea formaldehyde resin (PUF),
b) 60 - 99 wt% of water (wt% relative to the total composition weight),
c) a latent curing catalyst, preferably an ammonium salt, more preferably ammoniumsulfate,
d) optional urea extension,
e) optional fiber adhesion promoters, preferably silanes,
f) optional solubility improver, preferably ammonia, and/or
g) optional solution viscosity modifiers, stabilisers, silicone oil or dust oil.

Further, the invention relates to a sizing composition for use in saturation or impregnation applications which comprises
a) 1 - 70 wt% of the aldehyde based resin described above wherein the resin is PF, PUF , MPF, UF, MF, MUF, or MUPF resin,
b) 30-99 wt% of water (wt% relative to the total composition weight) ,
c) optionally 0,1 - 30 wt% of water-miscible solvents, preferably from the group of aliphatic mono- or polyhydric alcohols with 1-5 carbon atoms, more preferably methanol,
d) optionally 0,1 - 50 wt% of a urea-formaldehyde, melamine-formaldehyde, or melamine-urea-formaldehyde resin,
e) optionally 0,1 - 20 wt% of flexibility enhancers, preferably from the group of mono-, di-, and polyhydric compounds comprising 1-10 carbon atoms, more preferably mono-, di-, and polyethyleneglycols,
f) optionally a latent or non-latent curing catalyst, preferably an acidic organic or inorganic compound, more preferably the salt of an amine and a strong acid,
g) optional urea extension,
h) optional wetting agents,
i) optional release agents, and/or
j) optional solution viscosity modifiers, stabilisers, silicone oil or dust oil .

Further, the invention relates to a curable aqueous composition for use in board and wood applications comprising
a) 1 - 70 wt% of the aldehyde based resin described above wherein the resin is UF, MF, MUF, PF, or MUPF resin,
b) 30-99 wt% of water (wt% relative to the total composition weight),
c) optionally a urea-formaldehyde, melamine-formaldehyde, melamine-urea-formaldehyde resin, melamine-urea-phenol-formaldehyde resin, or phenol-formaldehyde resin
d) optionally a catalyst, preferably sodium hydroxide,
e) optional urea extension, and/or
f) optional solution viscosity modifiers, stabilisers, buffering substances .

Further, the invention relates to the use of reducing sugars for reducing aldehyde (e.g.formaldehyde) emissions of a curable aldehyde based resin composition by addition of the reducing sugars directly before manufacture of mineral wool (glass fibre and stone fibre) products, wooden boards, plywood, coated materials and/or impregnated material products and to the use of the aldehyde based resin composition described above for the manufacture of mineral wool (glass fibre and stone fibre) products, wooden boards, plywood, coated materials and/or impregnated material.

The aldehyde based resin composition can meet the strictest requirements for formaldehyde emissions. The requirements are listed in table 1.

**Table 1: Various restrictions and classifications of emissions (n.a. means not applicable)**

| | **Desiccator Value JAS 1460 [mg/I]** | **Emission Chamber Value EN 717-1 [ppm]** | **Finnish Emission Classification of Building Materials M1/M2 [mg/(m²h)]** | **French Emission Classification of Building Materials [mg/m³]** |
|---|---|---|---|---|
| **E1 Class** | n.a. | < 0.1 | n.a. | n.a. |
| **CARB 2** | n.a. | < 0.06 | n.a. | n.a. |
| **F ^{∗∗∗∗}** | < 0.3 | - | n.a. | n.a. |
| **Untreated Wood** | < 0.1 | 0.008 (90% percentile) | n.a. | n.a. |
| **Formalde hyde** | n.a. | n.a. | < 0.05/ < 0.125 | 0.01 |
| **Ammonia** | n.a. | n.a. | < 0.03/ <0.06 | n.a. |

In the area of mineral wool products the Eurofins M1 classification of formaldehyde and ammonia emissions should be surpassed (column 4: Finnish Emission Classification of Building Materials M1/M2 [mg/(m²h)]).

E1 class refers to the German classification of the emission for formaldehyde from wooden boards, the maximum permissible level of emission being 0.1 ppm as according to standard EN 717-1.

CARB 2 refers to the emission standard of the Californian Air Resources Board, issued in 2009, which came into force in California between 2010 and 2012 and will have impact not only in the other states of the USA, but also as a reference benchmark standard for international trade, particularly for the Asian and European areas.

F^{∗∗∗∗} (F-four star) is a Japanese threshold standard for formaldehyde emission referring to the Japanese Standard JAS 1460, being below 0.3 mg/l.

The M1/M2 criteria come from Rakennustieto (Building Information Foundation RTS), a private owned assembly of 47 Finnish building organisations, which poses the most advanced criteria in indoor air in Europe. Even if the M1 and M2 criteria are not obligatory, but only voluntary, it sets an important standard.

The French standard is a new legislation from the Ministère de l'Écologie, du Développement durable, des Transports et du Logement (Construction, urbanisme, aménagement et ressources naturelles, Etiquetage des emissions en polluants volatils des produits de construction et de decoration), which will be nationally valid from January 1, 2012.

For comparison the emission values for untreated wood are given in row 4 of table 1. The base material for boards is wood that is processed by drying in order to reduce moisture and to render it usable for further processing during production. Since elevated temperatures are used for drying, formaldehyde is created from the wood material (decomposition of various cellulose based ingredients). This formaldehyde emission contributes to the overall formaldehyde emission of the wooden composite material, but is not influenced by the formaldehyde content of the adhesive.

Typical emissions from dried chips for particle board production without adding formaldehyde based resins are up to 2 mg/100 g dry wood measured in accordance to the Perforator method EN 120: EN 120 involves boiling test specimens in toluene at nearly 110°C in a Perforator. The toluene vapour with extracted formaldehyde is condensed and collected by a perforator (a continuous extractor) at the bottom of a reactor filled with water. The toluene passes the water from the bottom, and the extracted formaldehyde is collected in water and analysed photometrically, e.g. by the acetyl acetone method (VDI-Regulation 3484, Part 2).

Formaldehyde in aqueous solution reacts with ammonium ions and acetyl acetone to Diacetyldihydrolutidine (Hantzsch Reaction). This has an absorption maximum at 412 nm. The sample is put into a flask, weighed, mixed with acetyl acetone reagent and with distilled water filled and shaken. After 30 minutes at 40°C, the sample is measured. Parallel, a blank solution prepared by mixing of acetyl acetone reagent and water. Both solutions are optically measured at 412 nm in the UV-spectrophotometer.

As opposed to wood, the formaldehyde emissions of impregnation paper and other materials, is usually zero and thus has no measureable formaldehyde emission contribution to the product formaldehyde emission.

### DESCRIPTION OF ILLUSTRATIVE EMBODIMENTS

In the examples, as a representation of a reducing carbohydrate feedstock (RCF), inverted crystal sugar (predominantly fructose, glucose) syrup was used, which was prepared by in situ from a non-reducing raw material - crystal sugar (sucrose). It is also noted that in the examples where an inorganic alkaline catalyst is used to prepare the resin, it is necessary for it to be neutralised with a hardener on curing. The stoichiometric amount required for this neutralisation is referred to as the "equivalence point" or "ep". In practice an excess of hardener is used for kinetic reasons. In such cases the excess is written as a percentage: so a 10% excess of hardener would be written as "ep+10%". All percentages are defined on a weight/weight basis.

### Comparative Example 1

To a reactor equipped for atmospheric reflux, 148 grams of deionised water were added and heated to 55°C. To this 487 grams of aqueous phenol solution (91.8%), 59 grams of deionised water, and 89.4 grams of NaOH (50%) were also added, and the combined mixture heated to 60°C. Then 1017 grams of formaldehyde solution (56.1%) was slowly added over 60 minutes at a temperature of 61°C. The mixture was then heated to 65°C and stirred at this temperature for 5 hours. After this time the mixture was cooled to 40°C and then divided as follows.

(Sample A) 400 grams of the above mixture was removed and stirred at 35°C for 50 min. in a separate vessel; after which time the mixture was cooled down to 20°C.

(Sample B) 364 grams of the above mixture was removed and combined with 36 grams of urea. Then the mixture was stirred at 35°C for 50 min. in a separate vessel; after which time the mixture was cooled down to 20°C.

(Sample C) 336 grams of the above mixture was removed and combined with 46 grams of urea. Then the mixture was stirred at 35°C for 50 min. in a separate vessel; after which time the mixture was cooled down to 20°C.

(Sample D) 304 grams of the above mixture was removed and combined with 96 grams of urea. Then the mixture was stirred at 35°C for 50 min. in a separate vessel; after which time the mixture was cooled down to 20°C.

For determining the viscosity according ISO 3219:1993 a cone-plate system is used at 20°C, with the typical characteristics: cone 50 mm diameter, 1° tilt and 100 micron flattening at the apex. The current values of the cone are stored in an integrated chip in the rotating body and before the measurement automatically transferred to the rheometer. The shear rate gamma-point is 200 1/s.

The measurement of free phenol was made by a laboratory method; a HPLC Spectra-Physics P 4000 with a low pressure gradient mixer, equipped with an Auto Sampler AS 3000 and a Spectra system UV 6000 LP, the column was a Superspher RP-18e 125-3 from Merck. The measurement was made at a detector wave length of 271 nm, the flow was 1,2 ml/min and gradient with three solvents was made. Solvent A was water HPLC-grade, solvent B was methanol HPLC-grade and solvent C was phosphoric acid 0.1 n, prepared by diluting of phosphoric acid 85 % suprapur from Merck with water of solvent A. The gradient was (time in minutes/%A/%B/%C): (0/80/15/5), (5/80/15/5), (20/5/90/5), (25/5/90/5), (30/80/15/5), (35/80/15/ 5).

The determination of free formaldehyde according EN ISO 11402 is made by diluting the sample in 150 ml of ice water, afterwards 2 ml of 1 mol/I Sodium sulfite solution is added and stirred about 15 minutes. After this, 3 drops of starch solution are added and the whole solution is titrated with 0.05 mol/I Iodine solution until blue colour occurs. Then about 30 ml sodium carbonate solution is added and the whole is titrated with iodine solution again until a stable blue colour occurs. The amount of sulfite solution is then noted and used for calculation.

The measurement of solid content according to ISO 3251 is performed by weighing a certain amount of resin into a weighing vessel. Certain techniques to weigh and disperse the sample into the weighing vessel are described in ISO 3251. The vessel is then heated in a heating chamber for 60 minutes at 135°C for PF resins, or 60 minutes at 125°C for other resin types. The ISO 3251 depicts clearly the time and temperatures for different resins.

Infinite water tolerance is defined as a water tolerance greater than 50:1, fifty parts of water in one part of resin, measured according to ISO 8989.

### Resin characteristics

**Table 2: Resin characteristics of the comparative example 1.**

| **Parameter** | **Unit** | **Norm** | **Sample** | | | |
|---|---|---|---|---|---|---|
| | | | **A** | **B** | **C** | **D** |
| Solid content | % | ISO 3251 | 44.3 | 51.7 | 54.2 | 56.2 |
| pH | | | 9.7 | 9.8 | 9.9 | 9.9 |
| Water dilutability | | ISO 8989 | Inf. | Inf. | Inf. | Inf. |
| Free phenol (HPLC) | % | Lab method | 0.01 | 0.01 | 0.01 | 0.01 |
| Free formaldehyde (sulfite) | % | EN ISO 11402 | 5.3 | 1.5 | 0.65 | 0.34 |
| Viscosity | mPas | ISO 3219 | 86 | 72 | 55 | 45 |

### Inventive Example 1

To a suitable reactor equipped for atmospheric reflux, 120 grams of deionised water were heated to 55°C. To this 180 grams of crystal sugar (sucrose) and 0.4 gram of citric acid monohydrate were added and heated to 90°C. The mixture was stirred for 120 min at 90°C, after which time the mixture (inverted sugar syrup) was cooled to 55°C. To this 482 grams of aqueous phenol solution (91.8%), 11.6 grams of deionised water, and 88.9 grams of NaOH (50%) were also added, and the combined mixture heated to 60°C. Then 1041 grams of formaldehyde solution (54.2%) was slowly added over 60 minutes at a temperature of 61°C. Then the mixture was heated to 65°C and stirred at this temperature for 5 hours. After this time the mixture was cooled to 40°C and then divided as follows.

(Sample A) 400 grams of the above mixture was removed and stirred at 35°C for 50 min. in a separate vessel; after which time the mixture was cooled down to 20°C.

(Sample B) 364 grams of the above mixture was removed and combined with 36 grams of urea. Then the mixture was stirred at 35°C for 50 min. in a separate vessel; after which time the mixture was cooled down to 20°C.

(Sample C) 336 grams of the above mixture was removed and combined with 46 grams of urea. Then the mixture was stirred at 35°C for 50 min. in a separate vessel; after which time the mixture was cooled down to 20°C.

(Sample D) 304 grams of the above mixture was removed and combined with 96 grams of urea. Then the mixture was stirred at 35°C for 50 min. in a separate vessel; after which time the mixture was cooled down to 20°C.

### Resin characteristics

**Table 3: Resin characteristics of the inventive example 1.**

| **Parameter** | **Unit** | **Norm** | **Sample** | | | |
|---|---|---|---|---|---|---|
| | | | **A** | **B** | **C** | **D** |
| Solid content | % | ISO 3251 | 54.4 | 54.7 | 55.8 | 58.0 |
| pH | | | 9.2 | 9.3 | 9.3 | 9.4 |
| Water dilutability | | ISO 8989 | Inf. | Inf. | Inf. | Inf. |
| Free phenol (HPLC) | % | Lab method | 0.04 | 0.03 | 0.04 | 0.05 |
| Free formaldehyde (sulfite) | % | EN ISO 11402 | 1.34 | 0.43 | 0.18 | 0.10 |
| Viscosity | mPas | ISO 3219 | 88 | 75 | 64 | 54 |

### Emission during curing

The resin was cured at 200°C, with the emissions being captured in water and then afterwards determined and quantified via photometric methods as follows.

A glass filter paper was rolled up to form a tube, which was then placed inside a test tube. This was then weighed. A resin mixture with hardener was then prepared: 20 grams of resin homogeneously mixed with an amount of ammonium sulfate sufficient to give ep+10%. 0.2 - 0.3 grams of this resin mixture were then dropped onto the glass filter paper, with the weight accurately recorded. The test tube containing the filter was then put into an Erlenmeyer flask that is closed except for an inlet and an outlet air tube. The inlet tube descends into the opening of the test tube containing the filter. The outlet tube, simply leads gasses from the internal volume of the Erlenmeyer flask to a connection with a heated hose. The Erlenmeyer flask was placed in an oven having a temperature of 200°C; the emission gasses being then conveyed from the Erlenmeyer flask and out of the oven via the heated hose to three gas absorption flasks (Drechsel bottles) connected in series. The first two flasks were each filled with 100 ml of distilled water. The third flask was left empty and was simply a trap to protect the air pump to which it was connected. The air pump was then used to draw 50 litres of air over 25 min.

The contents of the two water flasks in which the emission gasses are captured were then combined and the formaldehyde in the water determined via photometry. After cooling, the test tube containing the filter is reweighed. The emission of formaldehyde was calculated back to dry substance of cured resin and is therefore independent of the solid content of the resin. Photometrical determination was done using a LASA 100 Photometer and Dr. Lange Testkits (testkit LCK 325 for formaldehyde).

**Table 4: Emission during curing**

| | **Formaldehyde (mg/g dry resin)** |
|---|---|
| Inventive 1 C | 3 |
| Inventive 1 D | 2 |
| Comparative 1 C | 29 |
| Comparative 1 D | 11 |

### Emissions from the cured binder

A resin mixture with hardener was prepared: 20 grams of resin homogeneously mixed with an amount of ammonium sulfate sufficient to give ep+10%.

100 g of a 5% solid content aqueous solution was prepared. This consisted of the resin and an amount of ammonium sulfate sufficient to give ep+10%. Additionally to this solution an amount of ammonia equivalent to 0.35% based on resin was added. After stirring, the binder mixture was used to impregnate binder free glass fibre filters (Company: Pall Corporation. Type: A/E size 90 mm).

The impregnation was achieved by using a Büchner funnel and a vacuum of -0.8 bar for 20 seconds.

Afterwards the filters were cured at 200°C in an air circulation oven for 5 min. The weights of the filters were measured before the addition of the binder mixture and after the curing.

To 1 litre screw cap bottles, 50 ml distilled water were added. To each bottle an individual impregnated filter paper with cured resin was securely suspended via fishing line above the water's surface. The screw top then being securely tightened. The bottles were placed in a 20°C climatic chamber for 20 hours. Afterwards the formaldehyde emission was photometrical determined from that which was absorbed by the water. The emission of formaldehyde was calculated back to 5% dry substance of cured resin and was therefore independent of the solid content of the resin. Photometrical determination was done using a LASA 100 Photometer and Dr. Lange Testkits (testkit LCK 325 for formaldehyde).

**Table 5: Emission out of cured binder**

| | **mg Formaldehyde (5% Binder Load)** |
|---|---|
| Inventive 1 C | 0.3 |
| Inventive 1 D | 0.3 |
| Comparative 1 C | 0.9 |
| Comparative 1 D | 1 |

### Wet strength

For all strength tests the following standard test pieces were prepared: sand sticks with the dimensions 22 x 22 x 173 mm - the sand form being held together with cured resin binder.

In order to prepare the test specimens, resin coated sand is required. To achieve this 180g of a 40% solid content aqueous resin solution was first prepared. This solution also had an appropriate amount of ammonium sulfate in order to give ep + 10%, and 1.44 grams of a 10% solution of gamma-aminopropyltriethoxysilane.

This 40% aqueous resin solution was then added to 1800 grams of silica sand and mixed in a mechanical mixer for 10 minutes to give a homogeneous resin coated sand.

To make a standard sand stick, 135 grams of the above coated sand were weighted out and then put into a mould and compressed with a ram. Moulds containing compressed sand were then placed in an oven for 120 minutes at 180°C so as to cure the resin.

After curing the sticks were artificially aged. First they are submerged in boiling water for 4 hours. Then they are removed and stored in a 60°C oven for 16 hours. After this they are again submerged in boiling water for 4 hours. Then they are finally cooled for 1 hour in cold water before being tested for strength whilst still wet. The strength of the test specimens was determined by use of a Zwick Z010 TN2A with a 3 point bending apparatus and operation mode.

**Table 6: Aged strength**

| | **N/mm²** |
|---|---|
| Inventive 1 C | 5.4 |
| Inventive 1 D | 5.2 |
| Comparative 1 C | 4.2 |
| Comparative 1 D | 2.9 |

### Inventive Example 2

To a suitable reactor equipped for atmospheric reflux, 312 grams of deionised water were heated to 30°C. To this 63 grams of crystal sugar (sucrose) and 0.5 gram of citric acid monohydrate were added and heated to 95°C. The mixture was stirred for 100 min at 95°C, after which time the mixture (inverted sugar syrup) was cooled to 55°C. To this 554 grams of aqueous phenol solution (90.8%), 43 grams of deionised water, and 91 grams of NaOH (50%) were also added, and the combined mixture heated to 60°C. Then 1036 grams of formaldehyde solution (55.8%) was slowly added over 60 minutes at a temperature of 61°C. Then the mixture was heated to 65°C and stirred at this temperature for 4 hours. After this time the mixture was cooled to 40°C and then divided as follows.

(Sample A) 400 grams of the above mixture was removed and stirred at 35°C for 50 min. in a separate vessel; after which time the mixture was cooled down to 17°C.

(Sample B) 336 grams of the above mixture was removed and combined with 64 grams of urea. Then the mixture was stirred at 35°C for 50 min. in a separate vessel; after which time the mixture was cooled down to 17°C.

### Resin characteristics

**Table 7: Resin characteristics of the inventive example 2**

| Parameter | Unit | Norm | A | B |
|---|---|---|---|---|
| | | | | |
| Solid content | % | ISO 3251 | 45.6 | 52.0 |
| pH | | | 9.3 | 9.4 |
| Water dilutability | | ISO 8989 | Inf. | Inf. |
| Free phenol (HPLC) | % | Lab method | 0.05 | 0.05 |
| Free formaldehyde (sulfite) | % | EN ISO 11402 | 1.39 | 0.23 |
| Viscosity | mPas | ISO 3219 | 34 | 28 |

### Inventive Example 2.1

To a suitable reactor equipped for atmospheric reflux, 268 grams of deionised water were heated to 30°C. To this 360 grams of crystal sugar (sucrose) and 0.45 gram of citric acid monohydrate were added and heated to 95°C. The mixture was stirred for 100 min at 95°C, after which time the mixture (inverted sugar syrup) was cooled to 55 °C. To this 475 grams of aqueous phenol solution (90.8%), 37 grams of deionised water, and 78 grams of NaOH (50%) were also added, and the combined mixture heated to 60°C. Then 888 grams of formaldehyde solution (55.8%) was slowly added over 60 minutes at a temperature of 61°C. Then the mixture was heated to 65°C and stirred at this temperature for 4 hours. After this time the mixture was cooled to 40°C and then divided as follows.

(Sample A) 400 grams of the above mixture was removed and stirred at 35°C for 50 min. in a separate vessel; after which time the mixture was cooled down to 17°C.

(Sample B) 336 grams of the above mixture was removed and combined with 64 grams of urea. Then the mixture was stirred at 35°C for 50 min. in a separate vessel; after which time the mixture was cooled down to 17°C.

### Resin characteristics

**Table 8: Resin characteristics of the comparative example 2.1**

| Parameter | Unit | Norm | A | B |
|---|---|---|---|---|
| | | | | |
| Solid content | % | ISO 3251 | 55.0 | 57.1 |
| pH | | | 9.2 | 9.3 |
| Water dilutability | | ISO 8989 | Inf. | Inf. |
| Free phenol (HPLC) | % | Lab method | 0.14 | 0.13 |
| Free formaldehyde (sulfite) | % | EN ISO 11402 | 1.25 | 0.14 |
| Viscosity | mPas | ISO 3219 | 70 | 57 |

### Inventive Example 3

To a suitable reactor equipped for atmospheric reflux, 105 grams of deionised water were heated to 50°C. To this 234 grams of crystal sugar (sucrose) and 0.35 gram of citric acid monohydrate were added and heated to 98°C. The mixture was stirred for 90 min at 98°C, after which time the mixture (inverted sugar syrup) was cooled to 60°C. To this 634 grams of aqueous phenol solution (90.8 %), 26 grams of deionised water, and 64 grams of NaOH (50%) were also added, and the combined mixture heated to 63°C. Then 737 grams of formaldehyde solution (56.1%) was slowly added over 60 minutes at a temperature of 63°C. Then the mixture was heated to 67°C and stirred at this temperature for 220 minutes. After this time the mixture was cooled to 30°C and then divided as follows.

(Sample A) 400 grams of the above mixture was removed and stirred at 30°C for 39 min. in a separate vessel; after which time the mixture was cooled down to 17°C.

(Sample B) 348 grams of the above mixture was removed and combined with 52 grams of urea. Then the mixture was stirred at 30°C for 39 min. in a separate vessel; after which time the mixture was cooled down to 17°C.

### Resin characteristics

**Table 9 Resin characteristics of the inventive example 3**

| Parameter | Unit | Norm | A | B |
|---|---|---|---|---|
| | | | | |
| Solid content | % | ISO 3251 | 59.3 | 58.9 |
| pH | | | 9.0 | 9.2 |
| Water dilutability | | ISO 8989 | Inf. | Inf. |
| Free phenol (HPLC) | % | Lab method | 3.27 | 3.17 |
| Free formaldehyde (sulfite) | % | EN ISO 11402 | 0.12 | 0.02 |
| Viscosity | mPas | ISO 3219 | 111 | 89 |

### Comparative example 2

To a suitable reactor equipped for atmospheric reflux, 276 grams of deionised water were heated to 30°C. To this 490 grams of aqueous phenol solution (90.8 %), 38 grams of deionised water, and 80 grams of NaOH (50%) were also added, and the combined mixture heated to 60 °C. Then 915 grams of formaldehyde solution (55.8%) was slowly added over 60 minutes at a temperature of 61°C. Then the mixture was heated to 65°C and stirred at this temperature for 240 minutes. After this time the mixture was cooled to 40°C and then divided as follows.

(Sample A) 400 grams of the above mixture was removed and stirred at 35°C for 50 min. in a separate vessel; after which time the mixture was cooled down to 17°C.

(Sample B) 336 grams of the above mixture was removed and combined with 64 grams of urea. Then the mixture was stirred at 35°C for 50 min. in a separate vessel; after which time the mixture was cooled down to 17°C.

### Resin characteristics

**Table 10: Resin characteristics of the comparative example 2**

| Parameter | Unit | Norm | A | B |
|---|---|---|---|---|
| | | | | |
| Solid content | % | ISO 3251 | 43.3 | 52.2 |
| pH | | | 9.6 | 9.7 |
| Water dilutability | | ISO 8989 | Inf. | Inf. |
| Free phenol (HPLC) | % | Lab method | 0.02 | 0.05 |
| Free formaldehyde (sulfite) | % | EN ISO 11402 | 1.54 | 0.33 |
| Viscosity | mPas | ISO 3219 | 33 | 27 |

### Comparative example 3

To a suitable reactor equipped for atmospheric reflux, 121 grams of deionised water were heated to 50°C. To this 729 grams of aqueous phenol solution (90.8 %), 30 grams of deionised water, and 73 grams of NaOH (50%) were also added, and the combined mixture heated to 63°C. Then 847 grams of formaldehyde solution (56.1%) was slowly added over 60 minutes at a temperature of 63°C. Then the mixture was heated to 67°C and stirred at this temperature for 220 minutes. After this time the mixture was cooled to 30°C and then divided as follows.

(Sample A) 400 grams of the above mixture was removed and stirred at 30°C for 39 min. in a separate vessel; after which time the mixture was cooled down to 17°C.

(Sample B) 348 grams of the above mixture was removed and combined with 52 grams of urea. Then the mixture was stirred at 30°C for 39 min. in a separate vessel; after which time the mixture was cooled down to 17°C.

### Resin characteristics

**Table 11: Resin characteristics of the comparative example 3**

| Parameter | Unit | Norm | A | B |
|---|---|---|---|---|
| | | | | |
| Solid content | % | ISO 3251 | 54.1 | 57.3 |
| pH | | | 9.2 | 0.3 |
| Water dilutability | | ISO 8989 | Inf. | Inf. |
| Free phenol (HPLC) | % | Lab method | 1.80 | 1.62 |
| Free formaldehyde (sulfite) | % | EN ISO 11402 | 0.95 | 0.05 |
| Viscosity | mPas | ISO 3219 | 61 | 47 |

### Emission during curing

The formaldehyde emission during curing was determined as previously described.

**Table 12: Emissions during curing**

| | Formaldehyde (mg/gram dry resin) |
|---|---|
| | |
| Inventive 2 B | 10 |
| Inventive 2.1 B | 2 |
| Inventive 3 B | 0.5 |
| Comparative 2 B | 11 |
| Comparative 3 B | 1.3 |

### Emission out of cured binder

The formaldehyde emission from the cured binder was determined as previously described.

**Table 13: Emission of cured Binder**

| | mg Formaldehyde (5 % binder load) |
|---|---|
| | |
| Inventive 2 B | 0.66 |
| Inventive 2.1 B | 0.30 |
| Inventive 3 B | 0.23 |
| Comparative 2 B | 0.74 |
| Comparative 3 B | 0.48 |

### Aged Strengths

The aged strength was determined as previously described.

**Table 14: Aged Strengths**

| | N/mm² |
|---|---|
| Inventive 2 B | 5.1 |
| Inventive 2.1 B | 4.5 |
| Inventive 3 B | 6.2 |
| Comparative 2 B | 5.1 |
| Comparative 3 B | 6.1 |

### Inventive Example 4

To a suitable reactor equipped for atmospheric reflux, *389 grams of aqueous* phenol solution (90.6 %), 100 grams of deionized water, and 85 grams of NaOH (50%) were also added, and the combined mixture heated to 60°C. Then 807 grams of formaldehyde solution (55.8%) was slowly added over 90 minutes at a temperature of max 61°C. Then the mixture was heated to 67°C and stirred at this temperature for 75 minutes. The following cooling to 45°C was ensued by a dosing of 75 grams of deionized water. The mixture was cooled to 31°C by adding 500 grams of urea and stirred for 20 minutes. After this time the mixture was cooled to 20°C and then divided as follows.

(Sample A) 400 grams of the above mixture was removed and stirred at 20°C for 20 min. in a separate vessel; after which time the mixture remained at 20°C.

(Sample B) 392 grams of the above mixture was removed and combined with 8 grams of dicyandiamide. Then the mixture was stirred at 20°C for 20 min. in a separate vessel; after which time the mixture remained to 20°C.

### Emission out of cured binder

The formaldehyde emission from the cured binder was determined as previously described.

**Table 15: Emission of cured Binder**

| | mg Formaldehyde/g resin (5 % binder load) |
|---|---|
| | |
| Comparative 4 A | 23 |
| Inventive 4 B | 12 |

### Comparative Example 4 (C4)

To a suitable reactor equipped for atmospheric reflux, 569 grams of deionised water were added and heated to 55°C. To this 880 grams of aqueous phenol solution (92.2%), 59 grams of deionised water, and 41.4 grams of NaOH (50%) were also added, and the combined mixture heated to 70°C. Then 950 grams of formaldehyde solution (54.5%) were added slowly over 120 minutes at a temperature of 80°C. The mixture was then heated to 80°C and stirred at this temperature for 80 minutes. After this time the mixture was cooled to ambient temperature and ana lysed.

### Comparative Example 5 (C5)

To a suitable reactor equipped for atmospheric reflux, 495 grams of deionised water were added and heated to 55°C. To this 638 grams of aqueous phenol solution (92.4%), 55 grams of deionised water, 100 grams of sucrose, and 30.0 grams of NaOH (50%) were also added, and the combined mixture heated to 70°C. Then 682 grams of formaldehyde solution (55.1%) were added slowly over 90 minutes at a temperature of 80°C. The mixture was then heated to 80°C and stirred at this temperature for 110 minutes. After this time the mixture was cooled to ambient temperature and analysed.

### Inventive Example 5 (15)

To a suitable reactor equipped for atmospheric reflux, 489 grams of deionised water were added and heated to 55°C. To this 645 grams of aqueous phenol solution (91.4%), 60 grams of deionised water, 100 grams of glucose, and 30.0 grams of NaOH (50%) were also added, and the combined mixture heated to 70°C. Then 676 grams of formaldehyde solution (55.6%) were added slowly over 90 minutes at a temperature of 80°C. The mixture was then heated to 80°C and stirred at this temperature for 110 minutes. After this time the mixture was cooled to ambient temperature and analysed.

### Inventive Example 6 (I6)

To a suitable reactor equipped for atmospheric reflux, 66 grams of deionised water were heated to 55°C. To this 100 grams of crystal sugar (sucrose) and 0.4 gram of citric acid monohydrate were added and heated to 90°C. The mixture was stirred for 120 min at 90°C, after which time the mixture (inverted sugar syrup) was cooled to 55°C.

To this mixture was added 440 grams of deionised water were added and heated to 55°C. To this 638 grams of aqueous phenol solution (92.4%), 50 grams of deionised water, and 30.0 grams of NaOH (50%) were also added, and the combined mixture heated to 70°C. Then 676 grams of formaldehyde solution (55.6%) were added slowly over 90 minutes at a temperature of 80°C. The mixture was then heated to 80°C and stirred at this temperature for 110 minutes. After this time the mixture was cooled to ambient temperature and analysed.

### Inventive Example 7 (I7)

To a suitable reactor equipped for atmospheric reflux, 501 grams of deionised water were added and heated to 55°C. To this 638 grams of aqueous phenol solution (92.4%), 55 grams of deionised water, 100 grams of fructose, and 30.0 grams of NaOH (50%) were also added, and the combined mixture heated to 70°C. Then 676 grams of formaldehyde solution (55.6%) were added slowly over 90 minutes at a temperature of 80°C. The mixture was then heated to 80°C and stirred at this temperature for 110 minutes. After this time the mixture was cooled to ambient temperature and analysed.

### Resin characteristics

**Table 16: Resin characteristics of the comparative example C4 and C5, and the inventive examples I5 to I7**

| **Parameter** | **Unit** | **Norm** | **Examples** | | | | |
|---|---|---|---|---|---|---|---|
| | | | **C4** | **C5** | **I5** | **I6** | **I7** |
| Solid content | % | ISO 3251 | 45.5 | 46.2 | 45.6 | 45.5 | 45.2 |
| pH | | | 8.8 | 8.7 | 8.7 | 8.7 | 8.7 |
| Water dilutability | | ISO 8989 | 3.7 | 2.9 | 1.9 | 1.9 | 1.4 |
| Free phenol (HPLC) | % | Lab method | 1.9 | 1.8 | 2.4 | 2.3 | 3.6 |
| Free formaldehyde (sulfite) | % | EN ISO 11402 | 2.2 | 2.1 | 1.7 | 1.7 | 1.4 |
| Viscosity | mPa s | ISO 3219 | 19 | 22 | 21 | 20 | 17 |

## Claims

1. An aldehyde based resin composition containing one or more reducing sugars preferably chosen from the group consisting of glucose, mannose, glycolaldehyde, glyceraldehyde, erythrose, threose, ribose, arabinose, xylose, lyxose, allose, altrose, gulose, idose, galactose, talose, dihydroxyacetone, erythrulose, ribulose, xylulose, fructose, psicose, sorbose, tagatose, sedoheptulose, glucoheptose, mannoheptose, mannoheptulose, taloheptulose, alloheptulose, aldose, ketose or combinations thereof or a reducing sugar in the form of a carbohydrate feedstock with the bulk properties of a reducing sugar with a dextrose equivalent (DE) value of at least 50, even more preferably at least 75, and most preferably greater than 90, and optionally a cyanamide,
wherein the aldehyde based resin composition is obtainable by reaction of one or more hydroxy aromatic and/or one or more amino functional compounds (I) with one or more aldehyde functional compounds (II) and wherein the reducing sugar compounds (III) is added before or during said reaction and/or after said reaction, wherein the aldehyde based resin composition has infinite water dilutability defined as a water tolerance greater than 50:1, fifty parts of water in one part of resin, measured according to ISO 8989.

2. The aldehyde based resin composition according to claim 1 wherein the aldehyde compounds (II) are chosen from the group of C1- C10 aldehydes, C2- C10 dialdehydes or combinations thereof, preferably from the group of formaldehyde, paraformaldehyde, trioxane, hexamethylenetetramine, glyoxal, glutaraldehyde or combinations thereof.

3. The aldehyde based resin composition according to claim 1 - 2, wherein the cyanamide (compound IV) is dicyandiamide.

4. The aldehyde based resin composition according to claims 1 - 3, which is curable by a curing method chosen from the group of heat curing, hardener curing or curing by radiation.

5. The aldehyde based resin composition according to claims 1 - 4, wherein the aldehyde based resin is a resin from the group consisting of phenol formaldehyde resin (PF), phenol urea formaldehyde resin (PUF), urea formaldehyde resin (UF), melamine formaldehyde resin (MF), melamine urea formaldehyde resin (MUF), melamine phenol formaldehyde resin (MPF), melamine urea phenol formaldehyde resin (MUPF), resorcinol formaldehyde resin (RF), resorcinol urea formaldehyde resin (RUF), melamine urea resorcinol formaldehyde resin (MURF), resorcinol melamine formaldehyde resin (RMF), resorcinol phenol formaldehyde resin (RPF), resorcinol phenol urea formaldehyde (RPUF), or resins based on substituted and/or functionalized phenols.

6. The aldehyde based resin composition according to claims 2 - 5, wherein compound I is phenol and compound II is formaldehyde and the molar ratio of formaldehyde to phenol (F:P) is between 0.5:1 and 6.0:1, preferably between 1.0:1 and 5.5:1, more preferably between 1.1:1 and 5.0:1, more preferably between 1.3:1 and 4.0:1 and most preferably between 1.5:1 and 4.0:1.

7. The aldehyde based resin composition according to claim 6, wherein the resin further contains 1 - 50 wt% of an amino-compound, preferably urea, all wt% based on the final resin composition.

8. The aldehyde based resin composition according to claim 2 - 5, wherein compound I is an amino compound and compound II is formaldehyde, and the molar ratio of formaldehyde to amino compound (F:(NH₂)₂) is between 0.5:1 and 3.5:1, preferably between 0.8:1 and 2.5:1 and most preferably between 1.0:1 and 2.2:1.

9. The aldehyde based resin composition according to claim 1 - 8, wherein the amount of reducing sugar compounds III with a dextrose equivalent (DE) value of at least 15, preferably at least 25, more preferably at least 50, even more preferably at least 75, and most preferably greater than 90, is between 0.1 and 40 wt%, preferably between 0.5 and 30 wt%, more preferably between 0.5 and 25 wt%, and most preferably between 1.0 and 20 wt% (wt% of the final resin composition).

10. A process for the manufacture of the resin composition according to anyone of claims 1 - 9, comprising the steps of forming aldehyde based resin by reaction of one or more hydroxy aromatic and/or one or more amino functional compounds (I) with one or more aldehyde functional compounds (II) and wherein the reducing sugar compounds (III), and optionally a cyanamide (IV), is added before or during said reaction and/or after said reaction.

11. The process according to claim 10, wherein is III is added only after the reaction of I and II, and optionally with the addition of IV.

12. A sizing composition for use in mineral wool applications comprising
a) 1 - 40 wt% of the aldehyde based resin described in claims 1- 9, wherein the resin is a phenol formaldehyde resin (PF) or a phenol urea formaldehyde resin (PUF)
b) 60 - 99 wt% of water (wt% relative to the total composition weight),
c) a latent curing catalyst, preferably an ammonium salt, more preferably ammoniumsulfate,
d) optional urea extension,
e) optional fiber adhesion promoters, preferably silanes,
f) optional solubility improver, preferably ammonia, and/or
g) optional solution viscosity modifiers, stabilisers, silicone oil or dust oil.

13. A sizing composition for use in saturation or impregnation applications which comprises
a) 1 - 70 wt% of the aldehyde based resin described in claims 1- 9 wherein the resin is PF, PUF , MPF, UF, MF, MUF, or MUPF resin,
b) 30-99 wt% of water (wt% relative to the total composition weight) ,
c) optionally 0,1 - 30 wt% of water-miscible solvents, preferably from the group of aliphatic mono- or polyhydric alcohols with 1-5 carbon atoms, more preferably methanol,
d) optionally 0,1 - 50 wt% of a urea-formaldehyde, melamine-formaldehyde, or melamine-urea-formaldehyde resin,
e) optionally 0,1 - 20 wt% of flexibility enhancers, preferably from the group of mono-, di- , and polyhydric compounds comprising 1-10 carbon atoms, more preferably mono-, di- , and polyethyleneglycols,
f) optionally a latent or non-latent curing catalyst, preferably an acidic organic or inorganic compound, more preferably the salt of an amine and a strong acid,
g) optional urea extension,
h) optional wetting agents,
i) optional release agents, and/or
j) optional solution viscosity modifiers, stabilisers, silicone oil or dust oil .

## Patentansprüche

1. Harzzusammensetzung auf Aldehydbasis, die einen oder mehrere reduzierende Zucker enthält, bevorzugt aus der Gruppe ausgewählt, die aus Folgendem besteht: Glucose, Mannose, Glycolaldehyd, Glycerinaldehyd, Erythrose, Threose, Ribose, Arabinose, Xylose, Lyxose, Allose, Altrose, Gulose, Idose, Galactose, Talose, Dihydroxyaceton, Erythrulose, Ribulose, Xylulose, Fructose, Psicose, Sorbose, Tagatose, Sedoheptulose, Glucoheptose, Mannoheptose, Mannoheptulose, Taloheptulose, Alloheptulose, Aldose, Ketose oder Kombinationen davon oder einem reduzierenden Zucker in der Form eines Kohlenhydratausgangsmaterials mit den Masseeigenschaften eines reduzierenden Zuckers mit einem Dextroseäquivalents(*dextrose equivalent* - DE)-Wert von wenigstens 50, noch stärker bevorzugt wenigstens 75 und am stärksten bevorzugt über 90 und optional einem Cyanamid, wobei die Harzzusammensetzung auf Aldehydbasis durch eine Umsetzung einer oder mehrerer hydroxyaromatischer und/oder einer oder mehrerer aminofunktioneller Verbindungen (I) mit einer oder mehreren aldehydfunktionellen Verbindungen (II) erhältlich ist und wobei die reduzierenden Zuckerverbindungen (III) vor oder während der Umsetzung und/oder nach der Umsetzung zugegeben werden, wobei die Harzzusammensetzung auf Aldehydbasis eine unendliche Wasserverdünnbarkeit aufweist, die als eine Wassertoleranz von über 50 : 1 definiert ist, fünfzig Teile Wasser in einem Teil Harz, gemessen gemäß ISO 8989.

2. Harzzusammensetzung auf Aldehydbasis nach Anspruch 1, wobei die Aldehydverbindungen (II) aus der Gruppe von C1-C10-Aldehyden, C2-C10-Dialdehyden oder Kombinationen davon ausgewählt sind, bevorzugt aus der Gruppe von Formaldehyd, Paraformaldehyd, Trioxan, Hexamethylentetramin, Glyoxal, Glutaraldehyd oder Kombinationen davon.

3. Harzzusammensetzung auf Aldehydbasis nach Anspruch 1-2, wobei das Cyanamid (Verbindung IV) Dicyandiamid ist.

4. Harzzusammensetzung auf Aldehydbasis nach den Ansprüchen 1-3, die durch ein Härtungsverfahren härtbar ist, das aus der Gruppe einer Warmhärtung, einer Härtungsmittelhärtung oder einer Härtung durch Strahlung ausgewählt ist.

5. Harzzusammensetzung auf Aldehydbasis nach den Ansprüchen 1-4, wobei das Harz auf Aldehydbasis ein Harz aus der Gruppe ist, die aus Folgendem besteht:
Phenolformaldehydharz (PF), Phenol-Harnstoff-Formaldehydharz (*phenol urea formaldehyde* - PUF), Harnstoff-Formaldehydharz (*ureaformaldehyde* - UF), Melamin-Formaldehydharz (MF), Melamin-Harnstoff-Formaldehydharz (*melamine urea formaldehyde* - MUF), Melamin-Phenol-Formaldehydharz (MPF), Melamin-Harnstoff-Phenol-Formaldehydharz *(melamine urea resorcinol formaldehyde* - MUPF), Resorcin-Formaldehydharz (RF), Resorcin-Harnstoff-Formaldehydharz (*resorcinol urea formaldehyde* - RUF), Melamin-Harnstoff-Resorcin-Formaldehydharz (*melamine urea resorcinol formaldehyde* - MURF), Resorcin-Melamin-Formaldehydharz (RMF), Resorcin-Phenol-Formaldehydharz (RPF), Resorcin-Phenol-Harnstoff-Formaldehyd (*resorcinol phenol urea formaldehyde* - RPUF) oder Harzen, die auf substituierten und/oder funktionalisierten Phenolen basieren.

6. Harzzusammensetzung auf Aldehydbasis nach den Ansprüchen 2-5, wobei die Verbindung I Phenol ist und die Verbindung II Formaldehyd ist und das Molverhältnis von Formaldehyd zu Phenol (F : P) zwischen 0,5 : 1 und 6,0 : 1 liegt, bevorzugt zwischen 1,0 : 1 und 5,5 : 1, stärker bevorzugt zwischen 1,1 : 1 und 5,0 : 1, stärker bevorzugt zwischen 1,3 : 1 und 4,0 : 1 und am stärksten bevorzugt zwischen 1,5 : 1 und 4,0 : 1.

7. Harzzusammensetzung auf Aldehydbasis nach Anspruch 6, wobei das Harz ferner 1-50 Gew.-% einer Aminoverbindung enthält, bevorzugt Harnstoff, wobei alle Gew.-% auf der endgültigen Harzzusammensetzung basieren.

8. Harzzusammensetzung auf Aldehydbasis nach den Ansprüchen 2-5, wobei die Verbindung I eine Aminoverbindung ist und die Verbindung II Formaldehyd ist und das Molverhältnis von Formaldehyd zu Aminoverbindung (F : (NH₂)₂) zwischen 0,5 : 1 und 3,5 : 1 liegt, bevorzugt zwischen 0,8 : 1 und 2,5 : 1 und am stärksten bevorzugt zwischen 1,0 : 1 und 2,2 : 1.

9. Harzzusammensetzung auf Aldehydbasis nach den Ansprüchen 1-8, wobei die Menge von reduzierenden Zuckerverbindungen III mit einem Dextroseäquivalents(DE)-Wert von wenigstens 15, bevorzugt wenigstens 25, stärker bevorzugt wenigstens 50, noch stärker bevorzugt wenigstens 75 und am stärksten bevorzugt über 90 zwischen 0,1 und 40 Gew.-% liegt, bevorzugt zwischen 0,5 und 30 Gew.-%, stärker bevorzugt zwischen 0,5 und 25 Gew.-% und am stärksten bevorzugt zwischen 1,0 und 20 Gew.-% (Gew.-% der endgültigen Harzzusammensetzung).

10. Vorgang für die Herstellung der Harzzusammensetzung nach einem der Ansprüche 1-9, der die Schritte des Ausbildens eines Harzes auf Aldehydbasis durch die Umsetzung einer oder mehrerer hydroxyaromatischer und/oder einer oder mehrerer aminofunktioneller Verbindungen (I) mit einer oder mehreren aldehydfunktionellen Verbindungen (II) umfasst und wobei die reduzierenden Zuckerverbindungen (III) und optional ein Cyanamid (IV) vor oder während der Umsetzung und/oder nach der Umsetzung zugegeben werden.

11. Verfahren nach Anspruch 10, wobei III erst nach der Umsetzung von I und II und optional mit der Zugabe von IV zugegeben wird.

12. Schlichtenzusammensetzung zur Verwendung in Mineralwollanwendungen, die Folgendes umfasst:
a) 1-40 Gew.-% des Harzes auf Aldehydbasis, das in den Ansprüchen 1-9 beschrieben wird, wobei das Harz ein Phenolformaldehydharz (PF) oder ein Phenol-Harnstoff-Formaldehydharz (PUF) ist,
b) 60-99 Gew.-% Wasser (Gew.-% relativ zu dem Gesamtgewicht der Zusammensetzung),
c) einen latenten Härtungskatalysator, bevorzugt ein Ammoniumsalz, stärker bevorzugt Ammoniumsulfat,
d) optional eine Harnstoffverlängerung,
e) optional Faserhaftungspromotoren, bevorzugt Silane,
f) optional einen Löslichkeitsverbesserer, bevorzugt Ammoniak und/oder
g) optional Lösungsviskositätsmodifizierer, Stabilisatoren, Silikonöl oder Stauböl.

13. Schlichtungszusammensetzung zur Verwendung in Sättigungs- oder Imprägnierungsanwendungen, die Folgendes umfasst:
a) 1-70 Gew.-% des Harzes auf Aldehydbasis, das in den Ansprüchen 1-9 beschrieben wird, wobei das Harz PF-, PUF-, MPF-, UF-, MF-, MUF- oder MUPF-Harz ist,
b) 30-99 Gew.-% Wasser (Gew.-% relativ zu dem Gesamtgewicht der Zusammensetzung),
c) optional 0,1-30 Gew.-% mit Wasser mischbare Lösungsmittel, bevorzugt aus der Gruppe aliphatischer ein- oder mehrwertiger Alkohole mit 1-5 Kohlenstoffatomen, stärker bevorzugt Methanol,
d) optional 0,1-50 Gew.-% eines Harnstoff-Formaldehyd-, eines MelaminFormaldehyd- oder eines Melamin-Harnstoff-Formaldehydharzes;
e) optional 0,1-20 Gew.-% Flexibilitätsverstärker, bevorzugt aus der Gruppe von ein-, zwei- und mehrwertigen Verbindungen, die 1-10 Kohlenstoffatome umfassen, stärker bevorzugt Mono-, Di- und Polyethylenglykole;
f) optional einen latenten oder nicht latenten Härtungskatalysator, bevorzugt eine saure organische oder anorganische Verbindung, stärker bevorzugt das Salz eines Amins und eine starke Säure,
g) optional die Harnstoffverlängerung,
h) optional Benetzungsmittel,
i) optional Trennmittel und/oder
j) optional Lösungsviskositätsmodifizierer, Stabilisatoren, Silikonöl oder Stauböl.

## Revendications

1. Composition de résine à base d'aldéhyde contenant un ou plusieurs sucres réducteurs, de préférence choisis dans le groupe constitué par le glucose, le mannose, le glycolaldéhyde, le glycéraldéhyde, l'érythrose, le thréose, le ribose, l'arabinose, le xylose, le lyxose, l'allose, l'altrose, le gulose, l'idose, le galactose, le talose, la dihydroxyacétone, l'érythrulose, le ribulose, le xylulose, le fructose, le psicose, le sorbose, le tagatose, le sédoheptulose, le glucoheptose, le mannoheptose, le mannoheptulose, le taloheptulose, l'alloheptulose, l'aldose, le cétose ou des combinaisons de ceux-ci ou un sucre réducteur sous la forme d'un intermédiaire de carbohydrate ayant les propriétés générales d'un sucre réducteur ayant une valeur d'équivalent en dextrose (DE) d'au moins 50, encore plus préférablement d'au moins 75 et idéalement supérieur à 90, et facultativement un cyanamide, la composition de résine à base d'aldéhyde pouvant être obtenue par réaction d'un ou plusieurs composés hydroxy aromatiques et/ou d'un ou plusieurs composés à fonction amino (I) avec un ou plusieurs composés à fonction aldéhyde (II) et les composés de sucre réducteur (III) étant ajoutés avant ou pendant ladite réaction et/ou après ladite réaction, la composition de résine à base d'aldéhyde ayant un taux de dilution à l'eau infinie défini en tant que tolérance à l'eau supérieure à 50:1, cinquante parties d'eau dans une partie de résine, mesurée selon la norme ISO 8989.

2. Composition de résine à base d'aldéhyde selon la revendication 1, les composés aldéhydes (II) étant choisis dans le groupe des aldéhydes en C1 à C10, des dialdéhydes en C2 à C10 ou des combinaisons de ceux-ci, de préférence dans le groupe de formaldéhyde, de paraformaldéhyde, de trioxane, d'hexaméthylènetétramine, de glyoxal, de glutaraldéhyde ou des combinaisons de ceux-ci.

3. Composition de résine à base d'aldéhyde selon les revendications 1 à 2, le cyanamide (composé IV) étant le dicyandiamide.

4. Composition de résine à base d'aldéhyde selon les revendications 1 à 3, qui est durcissable par un procédé de durcissement choisi dans le groupe de durcissement à la chaleur, de durcissement avec durcisseur ou de durcissement par rayonnement.

5. Composition de résine à base d'aldéhyde selon les revendications 1 à 4, la résine à base d'aldéhyde étant une résine du groupe constitué par la résine phénol-formaldéhyde (PF), la résine phénol-urée-formaldéhyde (PUF), la résine urée-formaldéhyde (UF), la résine mélamine-formaldéhyde (MF), la résine mélamine-urée-formaldéhyde (MUF), la résine mélamine-phénol-formaldéhyde (MPF), la résine mélamine-urée-phénol-formaldéhyde (MUPF), la résine résorcine-formaldéhyde (RF), la résine résorcine-urée-formaldéhyde (RUF), la résine mélamine-urée-résorcine-formaldéhyde (MURF), la résine résorcine mélamine formaldéhyde (RMF), la résine résorcine-phénol-formaldéhyde (RPF), le résorcine-phénol-urée-formaldéhyde (RPUF) ou des résines à base de phénols substitués et/ou fonctionnalisés.

6. Composition de résine à base d'aldéhyde selon les revendications 2 à 5, le composé I étant le phénol et le composé II étant le formaldéhyde et le rapport molaire du formaldéhyde au phénol (F:P) étant compris entre 0,5:1 et 6,0:1, de préférence entre 1,0:1 et 5,5:1, plus préférablement entre 1,1:1 et 5,0:1, encore plus préférablement entre 1,3:1 et 4,0:1 et idéalement entre 1,5:1 et 4,0:1.

7. Composition de résine à base d'aldéhyde selon la revendication 6, la résine contenant en outre 1 à 50 % en poids d'un composé amino, de préférence l'urée, tous les % en poids étant basés sur la composition de résine finale.

8. Composition de résine à base d'aldéhyde selon les revendications 2 à 5, le composé I étant un composé amino et le composé II étant du formaldéhyde, et le rapport molaire du formaldéhyde au composé amino (F:(NH₂)₂) étant compris entre 0,5:1 et 3,5:1, de préférence entre 0,8:1 et 2,5:1 et plus préférablement entre 1,0:1 et 2,2:1.

9. Composition de résine à base d'aldéhyde selon les revendications 1 à 8, la quantité de composés de sucre réducteurs III ayant une valeur d'équivalent en dextrose (DE) d'au moins 15, de préférence d'au moins 25, plus préférablement d'au moins 50, encore plus préférablement d'au moins 75, et idéalement supérieure à 90, étant comprise entre 0,1 et 40 % en poids, de préférence entre 0,5 et 30 % en poids, plus préférablement entre 0,5 et 25 % en poids et idéalement entre 1,0 et 20 % en poids (% en poids de la composition de résine finale).

10. Procédé pour la fabrication de la composition de résine selon l'une quelconque des revendications 1 à 9, comprenant les étapes de formation d'une résine à base d'aldéhyde par réaction d'un ou plusieurs composés hydroxy aromatiques et/ou d'un ou plusieurs composés à fonction amino (I) avec un ou plusieurs des composés à fonction aldéhyde (II) et les composés de sucre réducteur (III), et facultativement un cyanamide (IV), étant ajoutés avant ou pendant ladite réaction et/ou après ladite réaction.

11. Procédé selon la revendication 10, III étant ajouté uniquement après la réaction de I et II, et facultativement avec l'ajout de IV.

12. Composition d'ensimage destinée à être utilisée dans des applications de laine minérale comprenant
a) 1 à 40 % en poids de la résine à base d'aldéhyde décrite dans les revendications 1 à 9, la résine étant une résine phénol formaldéhyde (PF) ou une résine phénol urée-formaldéhyde (PUF)
b) 60 à 99 % en poids d'eau (% en poids par rapport au poids total de la composition),
c) un catalyseur de durcissement latent, de préférence un sel d'ammonium, plus préférablement du sulfate d'ammonium,
d) une extension d'urée facultative,
e) des promoteurs d'adhérence de fibres facultatifs, de préférence des silanes,
f) un agent améliorant de la solubilité facultatif, de préférence l'ammoniac et/ou
g) des modificateurs de viscosité, des stabilisants, de l'huile de silicone ou de l'huile anti-poussière facultatifs, en solution.

13. Composition d'ensimage destinée à être utilisée dans des applications de saturation ou d'imprégnation, qui comprend
a) 1 à 70 % en poids de la résine à base d'aldéhyde décrite dans les revendications 1 à 9, la résine étant une résine PF, PUF, MPF, UF, MF, MUF ou MUPF,
b) 30 à 99 % en poids d'eau (% en poids par rapport au poids total de la composition),
c) facultativement 0,1 à 30 % en poids de solvants miscibles dans l'eau, de préférence dans le groupe des alcools mono- ou polyhydriques aliphatiques ayant 1 à 5 atomes de carbone, plus préférablement du méthanol,
d) facultativement 0,1 à 50 % en poids d'une résine urée-formaldéhyde, mélamine-formaldéhyde ou mélamine-urée-formaldéhyde,
e) facultativement 0,1 à 20 % en poids d'activateurs de flexibilité, de préférence dans le groupe des composés mono-, di- et polyhydriques comprenant 1 à 10 atomes de carbone, plus préférablement des mono-, di- et polyéthylèneglycols,
f) facultativement un catalyseur de durcissement latent ou non latent, de préférence un composé organique ou inorganique acide, plus préférablement le sel d'une amine et d'un acide fort,
g) une extension d'urée facultative,
h) des agents mouillants facultatifs,
i) des agents de libération facultatifs, et/ou
j) des modificateurs de viscosité, des stabilisants, de l'huile de silicone ou de l'huile anti-poussière facultatifs, en solution.
